# EUROPÄISCHE PATENTSCHRIFT

(11) **EP 0 999 626 B1**
(45) Veröffentlichungstag und Bekanntmachung des Hinweises auf die Patenterteilung: **04.02.2004**
(21) Anmeldenummer: 99120437.1
(22) Anmeldetag: 14.10.1999
(51) Int. Cl.: H02G 1/08

(54) **Zange zum Verschieben von flexiblem Strangmaterial**
Pincers for moving a flexible elongate item
Pince pour faire avancer un élément allongé flexible

(30) Priorität: 03.11.1998 DE 29819591 U
(43) Veröffentlichungstag der Anmeldung: 10.05.2000
(73) Patentinhaber: Katimex Cielker GmbH, 54584 Jünkerath (DE)
(72) Erfinder: Hasberg, Josef, 51491 Overath (DE)
(74) Vertreter: Wanischeck-Bergmann, Axel

(56) Entgegenhaltungen:
- CH-A- 580 344
- DE-A- 3 416 652
- DE-A- 19 503 648
- DE-C- 3 710 922
- NL-A- 9 200 038
- US-A- 2 606 466

## Beschreibung

Die Erfindung betrifft eine Zange zum Verschieben von flexiblem Strangmaterial, insbesondere flexiblen Stäben zum Einziehen von Kabeln in Kabelschutzrohre, mit einem Zangenkörper, der eine längsverlaufende Öffnung zur Aufnahme eines Teils des Strangmaterials aufweist, wobei der Zangenkörper einen schwenkbar gelagerten Handgriff aufweist, der derart im Zangenkörper gelagert ist, dass der Handgriff bei Betätigung mindestens teilweise in die längsverlaufende Öffnung des Zangenkörpers eingreift und wobei der Zangenkörper eine antreibbare Fördereinrichtung und an einem Ende ein Führungselement aufweist, welches der Aufnahme und Führung des Strangmaterials dient.

Derartige Zangen sind aus dem Stand der Technik bekannt. Beispielsweise offenbart die DE 34 16 652 C2 eine gattungsgemäße Zange, die einen längsverlaufenden Schlitz zur Aufnahme von Kabeln aufweist, wobei eine zu dem Schlitz verschiebbare Klemmleiste vorgesehen ist, welche von einem Handgriff betätigbar ist. Eine weitere Zange ist aus der DE 37 10 922 C1 bekannt, die einen Zangenkörper hat, welcher aus einem länglichen Griffteil und einem angeformten erweiterten Kopfteil besteht, wobei der Handgriff eine angeformte Leiste aufweist und in dem Kopfteil derart gelagert ist, dass die Leiste bei Betätigung des Handgriffs mindestens teilweise in die längsverlaufende Rille des Zangenkörpers eingreift. Die voranstehend beschriebenen Zangen haben sich für die Handhabung von flexiblem Strangmaterial bewährt.

Es ist ferner aus der DE 195 03 648 A1 eine Vorrichtung zur Handhabung einer Einziehfeder bekannt, bei der die Einziehfeder zwischen zwei gegenüberliegend angeordneten Rollensätzen angeordnet und geführt wird, wobei zumindest eine Rolle angetrieben wird, um eine Reibkraft auf die Einziehfeder zu übertragen. Diese Vorrichtung besteht aus zwei Gehäuseteilen, die schwenkbeweglich miteinander verbunden sind und
jeweils zumindest eine Rolle aufweisen, welche miteinander auf die Einziehfelder wirken. Die Rollen können über ein Zahnradgetriebe miteinander gekoppelt sein.

Schließlich ist aus der CH-A-580 344, welche als nächstliegender Stand der Technik angesehen wird, eine Vorrichtung zum Einziehen von elektrischen Leitungen in verlegten Leitungsröhren bekannt. Diese Vorrichtung weist ein mit einem Griff versehenes Gehäuse auf, in dem sich zwei, außen griffige Mitnehmerrollen befinden, die je drehfest mit einem Zahnrad verbunden sind. Eines dieser Zahnräder ist drehbar im Gehäuse gelagert und mittels einer Kurbel antreibbar, während das zweite Zahnrad mit Rolle in einem, im Gehäuse schwenkbar gelagerten nach außen geführten Hebel drehbar gelagert ist, derart, dass eine Schwenkbewegung des Hebels eine Kupplung der beiden Zahnräder bewirkt und eine mindestens der Zahnhöhe entsprechende gegenseitige Bewegung der gekuppelten Mitnehmerrollen ermöglicht. Bei dieser vorbekannten Vorrichtung wird die einzuziehende elektrische Leitung durch einen Griff und ein Rohrstück geführt, welches Rohrstück am Gehäuse befestigt ist und in einer Tülle endet. Das Rohrstück ist einerseits der Mitnehmerrollen angeordnet, während der Griff an der dem Rohrstück gegenüber liegenden Seite der Mitnehmerrollen angeordnet ist. Das Einfädeln der elektrischen Leitung ist bei dieser Vorrichtung umständlich und arbeitsintensiv.

Ausgehend von diesem Stand der Technik liegt der Erfindung die **Aufgabe** zugrunde, eine gattungsgemäße Zange dahingehend weiterzuentwickeln, dass die Handhabung der Zange wesentlich vereinfacht wird, wobei insbesondere die Führung des Strangmaterials verbessert und das Einlegen des Strangmaterials in die Zange vereinfacht werden soll.

Die **Lösung** dieser Aufgabenstellung sieht vor, dass das Führungselement um eine quer zur Längserstreckung des Zangenkörpers verlaufende Achse verschwenkbar im Zangenkörper gelagert ist.

Die erfindungsgemäße Zange sieht somit eine an sich bekannte Fördereinrichtung, beispielsweise ein Treibrad vor, das reibschlüssig auf das flexible Strangmaterial wirkt und dieses flexible Strangmaterial in Längsrichtung des Zangenkörpers verschiebt. Um die notwendige Reibkraft zu erzielen wird hierzu der Handgriff auf das Strangmaterial gepresst, so dass das Strangmaterial mit großer Reibkraft auf der Fördereinrichtung gefördert werden kann. Der Handgriff weist insbesondere eine kreisbogenabschnittförmige Druckfläche auf. In Kombination mit einer Vorrichtung zur Aufnahme und Ausgabe des Strangmaterials ist vorgesehen, dass der Radius der kreisbogenabschnittförmigen Druckfläche des Handgriffs im wesentlichen mit dem Radius einer der Aufnahme des Strangmaterials dienenden Abrolltrommel übereinstimmt. Der Handgriff mit der Druckfläche dient demzufolge als Druckhebel und hat darüber hinaus die Aufgabe, durch die aufgebrachte Druckkraft den Riemen zu spannen. Die Druckfläche ist als Gleitleiste ausgebildet, so daß in diesem Bereich, das heißt im Bereich zwischen dem Strangmaterial und der Gleitleiste die Reibkraft möglichst gering ist. Darüberhinaus ist erfindungsgemäß vorgesehen, daß der Zangenkörper ein Führungselement aufweist, welches das Strangmaterial beim Verlassen des Zangenkörpers führt, so daß das Strangmaterial insbesondere mittig in ein Leerrohr eingeschoben wird. Das Führungselement ist um eine quer zur Längserstreckung des Zangenkörpers verlaufende Achse verschwenkbar im Zangenkörper gelagert, so daß das Führungselement vor dem Einführen des Strangmaterials aus dem Zangenkörper derart herausgeschwenkt werden kann, so daß ein erleichtertes Einlegen des Strangmaterials bei Beginn der Arbeit erfolgen kann.

Vorzugsweise ist das Führungselement als Rohrabschnitt ausgebildet. Der Rohrabschnitt führt das Strangmaterial über eine bestimmte Länge. Das Führungselement weist eine zylindrische Bohrung auf. Um ein erleichtertes Einführen des Führungselementes bei Leerrohren mit unterschiedlichen Innendurchmessern zu ermöglichen ist nach einem weiteren Merkmal der Erfindung vorgesehen, daß das Führungselement eine konische, insbesondere kegelstumpfförmige Mantelfläche aufweist. Je nach Innendurchmesser des Leerrohres läßt sich das Führungselement mehr oder weniger weit in das Leerrohr einschieben, wobei ein möglichst weites Einschieben in das Leerrohr angestrebt wird, um einen möglichst festen Sitz der Zange im Leerrohr zu erzielen.

Schließlich ist nach einem weiteren Merkmal der Erfindung vorgesehen, daß der Handgriff einstückig mit dem Führungselement ausgebildet ist. Demzufolge kann das Führungselement mit dem Handgriff bewegt werden, so daß mit dem Öffnen des Zugangs zum Zangenkörper durch herausziehen des Handgriffs auch das Führungselement in seine vorteilhafte, die Aufnahme bzw. die Eingabe des Strangmaterials erleichternde Aufnahmestellung überführt wird. Ferner ist bei dieser Ausgestaltung sichergestellt, daß bei geschlossenem und auf das Strangmaterial eine Druckkraft übertragendem Handgriff auch das Führungselement in seine Führungsposition gebracht ist, so daß Beschädigungen am Strangmaterial durch Druckkräfte im Bereich des Führungselementes rechtwinklig zur Längsstreckung des Strangmaterials ausgeschlossen sind.

Weitere Merkmal und Vorteile der erfindungsgemäßen Zange ergeben sich aus der nachfolgenden Beschreibung der zugehörigen Zeichnung, in der eine Seitenansicht der erfindungsgemäßen Zange in geschlossener Position dargestellt ist.

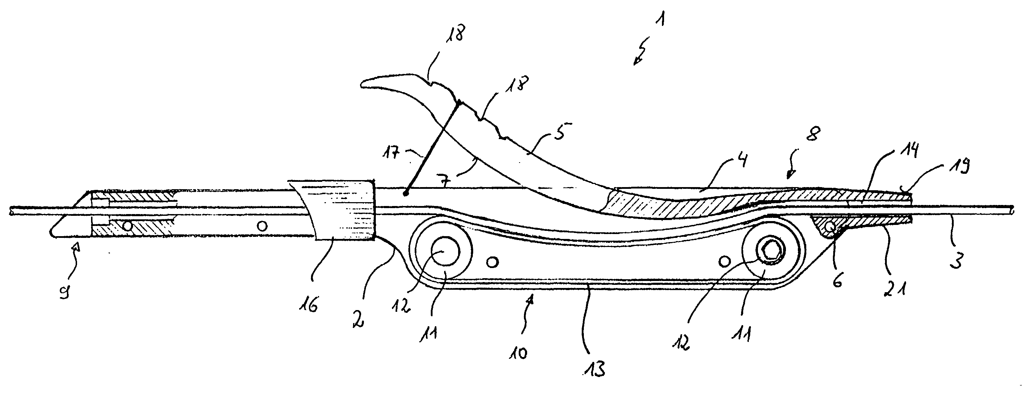

Eine in der Figur dargestellte Zange 1 besteht aus einem Zangenkörper 2, der eine längsverlaufende Öffnung zur Aufnahme eines Teils eines flexiblen Strangmaterials 3 aufweist. Der Zangenkörper 2 besteht aus zwei plattenförmigen Elementen, von denen in der Figur 1 nur das plattenförmige Element 4 dargestellt ist.

Die beiden plattenförmigen Elemente 4 sind im Abstand zueinander angeordnet und bilden zwischen sich die Öffnung des Strangmaterials 3. Darüber hinaus ist zwischen den plattenförmigen Elementen 4 ein Handgriff 5 um eine Achse 6 schwenkbar gelagert.

Der Handgriff 5 weist eine im Bereich der Achse 6 beginnende und in den Zangenkörper 2 ausgerichtete Druckfläche 7 auf. Darüber hinaus ist der Handgriff 5 im Bereich eines Kopfteils 8 des Zangenkörpers 2 angeordnet und erstreckt sich in Richtung eines länglichen Griffteils 9 des Zangenkörpers 2.

Die Druckfläche 7 ist durch eine Bewegung des Handgriffs 5 in Richtung des Griffteils 9 des Zangenkörpers 2 auf das Strangmaterial 3 preßbar.

Der Druckfläche 7 des Handgriffs 5 gegenüberliegend ist eine antreibbare Fördereinrichtung 10 im Zangenkörper 2, das heißt im Kopfteil 8 des Zangenkörpers 2 angeordnet. Die Fördereinrichtung 10 besteht aus zwei im Abstand zueinander angeordneten Antriebsrollen 11, die um Achsen 12 drehbar im Zangenkörper 2 gelagert sind. Darüber hinaus weist die Fördereinrichtung 10 einen als Zahnriemen ausgebildeten Treibriemen 13 auf, der die Antriebsrollen 11, welche als Antriebsritzel ausgebildet sind, umschlingt.

Beide Achsen 12 stehen über eine Seitenfläche des plattenförmigen Elementes 4 hervor und weisen einen in diesem Bereich polygonalen Querschnitt auf. An diese im Querschnitt polygonal ausgebildeten Abschnitte der Achsen 12 ist ein nicht näher dargestellter Antrieb anflanschbar. Der Antrieb kann beispielsweise aus einer Handkurbel und/oder einem Elektromotor bestehen. Bevorzugt ist der Antrieb als Handbohrmaschine ausgebildet, deren Spannfutter mit dem polygonalen Abschnitt einer Achse 12 verbindbar ist.

Der Treibriemen 13 weist auf seiner dem Strangmaterial 3 zugewandten Oberfläche einen den Reibkoeffizienten erhöhenden Betrag auf.

An beiden Enden der Fördereinrichtung 10 weist die Zange 1 ein Führungselement auf. Im Bereich des Kopfteiles 8 des Zangenkörpers 2 ist dieses Führungselement 21 als Rohrabschnitt ausgebildet, wohingegen im Bereich des Griffteils 9 des Zangenkörpers 2 das Führungselement stabförmig ausgebildet ist.

Es ist ferner zu erkennen, daß der Griffteil 9 eine Ummantelung 16 aufweist, die zumindest die eingangs dargestellte Öffnung zur Aufnahme des Strangmaterials 3 im Zangenkörper 2 und insbesondere auch die Unterseite des Zangenkörpers 2 verschließt. Diese Ummantelung 16 dient der Vermeidung von Verletzungen der handhabenden Hand bei schneller Förderung des Strangmaterials 3.

Schließlich ist noch zu erkennen, daß der Zangenkörper 2 im Bereich des Griffteils 9 eine als Metallklammer 17 ausgebildete Arretierung aufweist, mit der der Handgriff 5 relativ zum Zangenkörper 2 festgelegt werden kann. Die im wesentlichen U-förmig ausgebildete Metallklammer 17 hat an ihren Schenkeln aufeinanderzu abgebogene Stege, die in diametral gegenüberliegende Bohrungen in den plattenförmigen Elementen 4 des Zangenkörpers 2 eingreifen, so daß die Metallklammer 17 um diese Bohrungen relativ zum Zangenkörper 2 verschwenkbar ist.

Nachdem der Handgriff 5 in Richtung auf den Griffteil 9 des Zangenkörpers 2 gedrückt ist, kann die Metallklammer 17 über den Handgriff 5 geschoben werden, wo die Metallklammer 17 in korrespondierende Nuten 18 einrasten kann. In dieser Stellung ist der Handgriff 5 derart mit dem Zangenkörper 2 im Bereich des Griffteils 9 verspannt, daß der notwendige Anspreßdruck des Strangmaterials 3 auf den Treibriemen 13 erzeugt wird, der ein im wesentlichen schlupffreies Fördern des Strangmaterials 3 innerhalb der Zange 1 ermöglicht.

Damit der Anpreßdruck in Abhängigkeit der zu fördernden Länge des Strangmaterials 3 bzw. des Durchmessers des zu fördernden Strangmaterials 3 angepaßt werden kann, weist der Handgriff 5 mehrere in Längsrichtung des Handgriffs 5 hintereinanderliegenden Nuten 18 auf, die rechtwinklig zur Längsrichtung des Handgriffs 5 verlaufen. Wird die Metallklammer 17 in die der Achse 6 zugewandte Nut 18 des Handgriffs 5 eingerastet, so ist der Anpreßdruck der Druckfläche 7 auf dem Strangmaterial 3 größer, als bei einer Verrastung der Metallklammer 17 in einer weiter von der Achse 6 entfernt liegenden Nut 18.

Das Führungselement 21 ist ebenfalls um die Achse 6 schwenkbar im Zangenkörper 4 gelagert. Die Achse 6 ist unterhalb des Führungselementes 21 angeordnet, welches Führungselement 21 einstückig mit dem Handgriff 5 ausgebildet ist. Wird demzufolge der Handgriff 5 um die Achse 6 veschwenkt, so wird auch das Führungselement 21 zwischen zwei Stellungen hin- und herbewegt. Das Führungselement 21 kann die in der Figur dargestellte Position einnehmen, in der das Führungselement 21 das Strangmaterial 3 in Längsrichtung der Zange 1 führt.

Wird der Handgriff 5 in eine Position verschwenkt, in der das Strangmaterial 3 in die Zange 1 eingelegt wird, so wird auch das Führungselement 21 in eine zweite Position überführt, in der eine Durchtrittsöffnung 14 aus ihrer dargestellten Richtung in eine unter einem Winkel zur Längsachse der Zange 1 verlaufende Ausrichtung verstellt ist, die ein leichteres Einführen des Strangmaterials 3 in die Führungseinrichtung 21 ermöglicht.

Die Führungseinrichtung 21 besteht aus einem Rohrabschnitt, der eine konisch ausgebildete Außenmantelfläche 19 und die zylindrische und zentrisch angeordnete Durchtrittsöffnung 14 aufweist. Führungseinrichtung 21 und Handgriff 5 bestehen aus einem zähelastischen Kunststoff, so daß eine ausreichende Spannung auf das Strangmaterial 3 übertragen wird.

## Patentansprüche

1. Zange zum Verschieben von flexiblem Strangmaterial (3), insbesondere flexiblen Stäben zum Einziehen von Kabeln in Kabelschutzrohre, mit einem Zangenkörper (2), der eine längsverlaufende Öffnung zur Aufnahme eines Teils des Strangmaterials (3) aufweist, wobei der Zangenkörper (2) einen schwenkbar gelagerten Handgriff (5) aufweist, der derart im Zangenkörper (2) gelagert ist, dass der Handgriff (5) bei Betätigung mindestens teilweise in die längsverlaufende Öffnung des Zangenkörpers (2) eingreift und wobei der Zangenkörper (2), eine antreibbare Fördereinrichtung (10) und an einem Ende ein Führungselement (21) aufweist, welches der Aufnahme und Führung des Strangmaterials (3) dient,
**dadurch gekennzeichnet,**
**dass** das Führungselement (21) um eine quer zur Längserstreckung des Zangenkörpers (2) verlaufenden Achse (6) verschwenkbar im Zangenkörper gelagert ist.

2. Zange nach Anspruch 1,
**dadurch gekennzeichnet,**
**dass** das Führungselement (21) als Rohrabschnitt ausgebildet ist.

3. Zange nach Anspruch 2,
**dadurch gekennzeichnet,**
**dass** das Führungselement (21) eine zylindrische Bohrung aufweist.

4. Zange nach Anspruch 3,
**dadurch gekennzeichnet,**
**dass** das Führungselement (21) eine konische, insbesondere kegelstumpfförmige Mantelfläche (19) aufweist.

5. Zange nach Anspruch 1,
**dadurch gekennzeichnet,**
**dass** der Handgriff (5) einstückig mit dem Führungselement (21) ausgebildet ist.

6. Zange nach Anspruch 2,
**dadurch gekennzeichnet,**
**dass** der Handgriff (5) aus einem zähelastischen Material, beispielsweise einem Kunststoff, insbesondere Polyurethan ausgebildet ist.

## Claims

1. Pincers for moving flexible elongate material (3), particularly flexible rods for drawing in cables into cable ducts, said pincers comprising a body of pincers (2) including a longitudinally extending opening for receiving a part of said elongate material (3), which body of pincers (2) has a pivotally supported handle (5) which is supported within said body of pincers (2) in such a way that upon operation said handle (5) will at least partially engage in said longitudinally extending opening of said body of pincers (2), and said body of pincers (2) including a conveying means (10) adapted to be driven and a guide member (21) on one end thereof, which guide member serves for receiving and guiding said elongate material (3),
**characterized in**
**that** said guide member (21) is supported within said body of pincers for pivoting about an axis (6) extending transversely with respect to the longitudinal extension of said body of pincers (2).

2. Pincers according to claim 1,
**characterized in**
**that** said guide member (21) is formed as section of a tube.

3. Pincers according to claim 2,
**characterized in**
**that** said guide member (21) includes a cylindrical bore.

4. Pincers according to claim 3,
**characterized in**
**that** said guide member (21) has a conical, particularly a truncated cone-shaped surface area (19).

5. Pincers according to claim 1,
**characterized in**
**that** said handle (5) is formed as one piece with said guide member (21).

6. Pincers according to claim 2,
**characterized in**
**that** said handle (5) is made from a viscoplastic material, for example a synthetic material, particularly polyurethane.

## Revendications

1. Pince pour faire coulisser un matériau en écheveau flexible (3), en particulier des tiges flexibles pour tirer des câbles dans des tubes guide-câbles, avec un corps de pince (2) qui a une ouverture dans le sens longitudinal pour loger une partie du matériau en écheveau (3), le corps de pince (2) présentant une poignée (5) positionnée pivotante qui est positionnée dans le corps de pince (2) de telle manière que, lors d'un actionnement, la poignée (5) s'enclenche au moins partiellement dans l'ouverture longitudinale du corps de la pince (2) et le corps de la pince (2) présentant un dispositif de transport qui peut être entraîné (10) et un élément de guidage (21) à une extrémité, élément de guidage qui sert au logement et au guidage du matériau en écheveau (3),
**caractérisée en ce**
**que** l'élément de guidage (21) est positionné pivotant dans le corps de la pince autour d'un axe (6) qui est transversal par rapport à l'extension longitudinale du corps de la pince (2).

2. Pince selon la revendication 1,
**caractérisée en ce**
**que** l'élément de guidage (21) est configuré comme une section de tube.

3. Pince selon la revendication 2,
**caractérisée en ce**
**que** l'élément de guidage (21) présente une forure cylindrique.

4. Pince selon la revendication 3,
**caractérisée en ce**
**que** l'élément de guidage (21) présente une enveloppe (19) conique, en particulier en forme de cône tronqué.

5. Pince selon la revendication 1,
**caractérisée en ce**
**que** la poignée (5) est configurée en une pièce avec l'élément de guidage (21).

6. Pince selon la revendication 2,
**caractérisée en ce**
**que** la poignée (5) est formée en un matériau viscoplastique, par exemple en une matière synthétique, en particulier en polyuréthane.
